Europäisches Patentamt

European Patent Office

Office européen des brevets

(11) Publication number: **0 519 076 A1**

# EUROPEAN PATENT APPLICATION
## published in accordance with Art. 158(3) EPC

(21) Application number: 92900593.2

(22) Date of filing: **13.12.91**

(86) International application number:
**PCT/JP91/01709**

(87) International publication number:
**WO 92/12468 (23.07.92 92/19)**

(51) Int. Cl.⁵: **G05B 19/18**, G05B 19/417

(30) Priority: **08.01.91 JP 11561/91**

(43) Date of publication of application:
**23.12.92 Bulletin 92/52**

(84) Designated Contracting States:
**CH DE IT LI**

(71) Applicant: **FANUC LTD.**
**3580, Shibokusa Aza-Komanba, Oshino-mura**
**Minamitsuru-gun, Yamanashi 401-05(JP)**

(72) Inventor: **KANDA, Kunio 1652, Sinbashi**
**Gotenba-shi**
**Shizuoka 412(JP)**

(74) Representative: **Brunner, Michael John**
**GILL JENNINGS & EVERY 53-64 Chancery**
**Lane**
**London WC2A 1HN(GB)**

(54) **TRANSMISSION/RECEPTION DEVICE FOR OPERATING NUMERICALLY CONTROLLED MACHINE BY RADIO CONTROL AND ITS COUPLING METHOD.**

(57) An operator transmits the ID number of a numerically controlled machine to be called to all stand-by numerically controlled machines. In response to this, all the machines display the received ID number and their own numbers to allow the operator to confirm the numbers. The operator issues a command for coupling a portable and wireless manual operation device used for the call to the called numerically controlled machine. According to this coupling command, the uncalled numerically controlled machines return to their stand-by states.

# Fig. 1

```
        ( START )
            │
            ▼
┌──────────────────────────────┐
│ ID number of a numerical     │
│ control system to be called  │
│ is transmitted towards all   │
│ the numerical control        │──── (1)
│ systems under a waiting      │
│ position, by employing a     │
│ portable and wireless        │
│ manual operating equipment   │
└──────────────────────────────┘
            │
            ▼
┌──────────────────────────────┐
│ Each of the numerical        │
│ control systems under a      │
│ waiting position displays    │──── (2)
│ the ID number received and   │
│ the ID number of its own     │
└──────────────────────────────┘
            │
            ▼
┌──────────────────────────────┐
│ An operator finds a          │
│ numerical control system     │──── (3)
│ displaying two same ID       │
│ numbers                      │
└──────────────────────────────┘
            │
            ▼
┌──────────────────────────────┐
│ The operator employs the     │
│ called numerical control     │
│ system to transmit an        │
│ instruction signal for       │
│ connecting the called        │
│ numerical control system     │──── (4)
│ and the portable and         │
│ wireless manual operating    │
│ equipment employed for the   │
│ calling, toward the portable │
│ and wireless manual          │
│ operating equipment          │
└──────────────────────────────┘
            │
            ▼
          ( A )
```

```
          ( A )
            │
            ▼
┌──────────────────────────────┐
│ The called numerical control │
│ system is connected with the │
│ portable and wireless manual │──── (5)
│ operating equipment employed │
│ for the calling              │
└──────────────────────────────┘
            │
            ▼
┌──────────────────────────────┐
│ All the numerical control    │
│ systems remaining uncalled   │──── (6)
│ are returned to a waiting    │
│ position                     │
└──────────────────────────────┘
            │
            ▼
         ( END )
```

## BACKGROUND OF THE INVENTION

This invention relates to a combination of a transmitter and a receiver for wireless operating a numerical control system and a method for connecting a numerical control system and a portable and wireless manual operating equipment by employing the foregoing combination of a transmitter and a receiver for wireless operating a numerical control system. More specifically, this invention relates to a combination of a transmitter and a receiver for wireless operating a numerical control system and a method for connecting a numerical control system and a portable and wireless manual operating equipment, such a combination or a method realizing advantages tabulated below:

a. An erroneous calling of a wrong numerical control system is prevented, in the case where plural numerical control systems are located at an area,

b. An arbitrary numerical control system is allowed to be connected with an arbitrary portable and wireless manual operating equipment, because no specific numerical control system is tied with no specific portable and wireless manual operating equipment, resultantly the quantity of the portable and wireless manual operating equipments is allowed to be selected less than the quantity of the numerical control systems.

A numerical control system proper is generally equipped with a means for operating itself. However, there are cases in which the location of a means for operating a numerical control system does not allow an operator to observe the machining region or there are cases in which the distance between a means for operating a numerical control system and the machining region is too long to allow an operator to readily observe a miner part of the machining region. In these cases, it is difficult for an operator to observe a machining region, while conducting manual operation employing a means for operating a numerical control system which means is equipped to the numerical control system proper.

For the purpose to allow an operator to observe the machining region, while conducting manual operation, under the foregoing environments, a portable and wireless manual operating equipment which is not fixed to a numerical control system is generally employed. This portable and wireless manual operating equipment is allowed to be employed for plural purposes, including selection of an arbitrary numerical control system, connection of a selected numerical control system and the portable and wireless manual operating equipment employed for selection of the foregoing numerical control system, and manual operation of the selected numerical control system by employing the portable and wireless manual operating equipment employed for selection of the numerical control system.

A combination of a transmitter and a receiver for wireless operating a numerical control system available in the prior art will be described below.

In the case where plural numerical control systems which can be manually operated by employing a portable and wireless manual operating equipment are installed at a location, portable and wireless manual operating equipments of a quantity identical to the quantity of the numerical control systems are prepared and each couple of the portable and wireless manual operating equipment and the numerical control system is given an ID number. Provided an electric power is applied to a portable and wireless manual operating equipment, the portable and wireless manual operating equipment automatically selects a carrier frequency which is not employed, and transmits its own ID number towards all the numerical control systems by employing the selected carrier frequency. A numerical control system having the ID number identical to the transmitted ID number responds to the portable and wireless manual operating equipment which transmitted its ID number. As a result, the numerical control system and the portable and wireless manual operating equipment which have the same ID number are connected by the selected carrier frequency and the couple becomes able to communicate with each other.

In this manner, each numerical control system is required to have a portable and wireless manual operating equipment to be tied with, and they have the same ID number. However, if plural numerical control systems have been erroneously given the same ID number, plural numerical control systems turn out to be simultaneously controlled by one portable and wireless manual operating equipment. Furthermore, if a wrong portable and wireless manual operating equipment is employed, a wrong numerical control system unexpectedly turns out to work. Either case is dangerous and causes erroneous machining.

## SUMMARY OF THE INVENTION

Therefore, a first object of this invention is to provide a combination of a transmitter and a receiver for wireless operating a numerical control system, wherein a wrong numerical control system is not called, an arbitrary numerical control system is allowed to be operated by an arbitrary portable and wireless manual operating equipment, and a less quantity of portable and wireless manual operating equipments is required than the quantity of numerical control systems.

A second object of this invention is to provide a method for connecting a numerical control system and a portable and wireless manual operating equipment, wherein a wrong numerical control system is not called, an arbitrary numerical control system is allowed to be operated by an arbitrary portable and wireless manual operating equipment, and a less quantity of portable and wireless manual operating equipments is required than the quantity of numerical control system.

To achieve the foregoing first object, a combination of a transmitter and a receiver for wireless operating a numerical control system in accordance with this invention is a combination of

A. a portable and wireless manual operating equipment provided:

a. a means which allows an operator to transmit the ID number of a numerical control system to be called, toward all the numerical control systems which are under a waiting position,

b. a means for connecting the portable and wireless manual operating equipment with the called numerical control system, in response to an instruction signal for connecting the portable and wireless manual operating equipment with the called numerical control system, the instruction signal being issued by the called numerical control system, and

c. a means for returning all the numerical control systems remaining uncalled, toward a waiting position (or a position before the ID number was received), after the connection between the portable and wireless manual operating equipment and the called numerical control system is finished, and

B. a numerical control system provided:

d. a means for displaying both the received ID number and the ID number of its own, for the purpose to allow the operator to find the numerical control system displaying two same ID numbers thereon,

e. a means which allows the operator to transmit the instruction signal for connecting the portable and wireless manual operating equipment with the called numerical control system, toward the portable and wireless manual operating equipment, by employing the called numerical control system, and

f. a means for connecting the called numerical control system with the portable and wireless manual operating equipment, in response to the instruction signal for connecting the portable and wireless manual operating equipment with the called numerical control system.

To achieve the foregoing second object, a method for connecting a numerical control system and a portable and wireless manual operating equipment comprises:

a. a step for allowing an operator to employ a portable and wireless manual operating equipment to transmit the ID number of a numerical control system to be called, toward all the numerical control systems under a waiting position,

b. a step for allowing the operator to find a numerical control system displaying two same ID numbers thereon, and

c. a step for allowing the operator to employ the numerical control system which was determined to be the called numerical control system to transmit an instruction signal for connecting the portable and wireless manual operating equipment with the numerical control system, toward the portable and wireless manual operating equipment, for the ultimate purpose to connect the called numerical control system and the portable and wireless manual operating equipment employed for the calling and to return all the numerical control systems remaining uncalled, to the position before the calling signal is received (or a waiting position).

BRIEF DESCRIPTION OF THE DRAWING

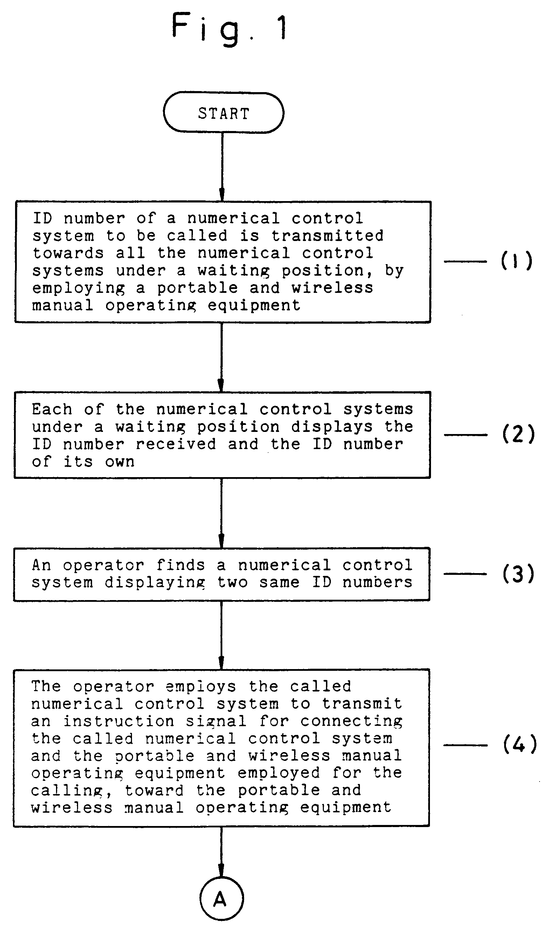

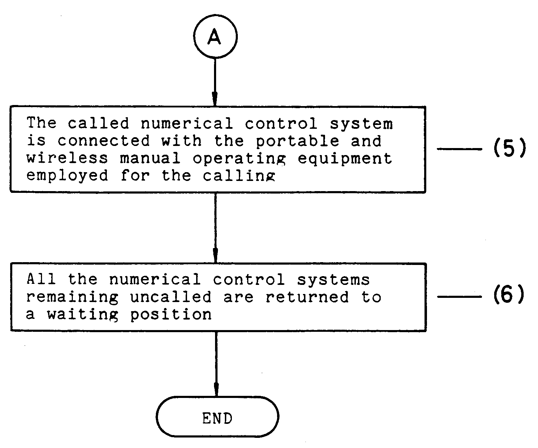

Fig. 1 is a flow chart illustrating the connection process of a transmitter and a receiver for wireless operating numerical control system in accordance with one embodiment of this invention.

DETAILED DESCRIPTION OF PREFERRED EMBODIMENT

A. A Transmitter and A Receiver for wireless operating A Numerical Control System

A transmitter and a receiver for wireless operating a numerical control system in accordance with one embodiment of this invention is a combination of the following two ingredients.

A first ingredient is a portable and wireless manual operating equipment having the following functions.

a. An operator is allowed to transmit the ID number of a numerical control system which he would like to call, toward all the numerical control systems which are then in a waiting position.

b. After finding out that a right numerical control system was called, the operator is allowed to employ the called numerical control system to transmit an instruction signal for connecting the called numerical control system and the portable and wireless manual operating equipment employed for the calling, toward the portable and wireless manual operating equipment employed for the calling and for returning the numerical control systems remaining uncalled to the position before the ID number was received.

A second ingredient is a numerical control system having the following functions.

a. When receiving the ID number of a numerical control system to be called, each numerical control system displays thereon the ID number received and its own ID number.

b. The operator is allowed to find a numerical control system displaying two same ID numbers thereon. After finding the numerical control system he called, he is allowed to employ the right numerical control system to transmit an instruction signal for connecting the called numerical control system and the portable and wireless manual operating equipment employed for the calling, toward the portable and wireless manual operating equipment employed for the calling, for the ultimate purpose to connect the portable and wireless manual operating equipment employed for the calling and the numerical control system called.

B. A method for connecting A Numerical Control System and A Wireless Manual Operating Equipment

A method for connecting a numerical control system and a wireless manual operating equipment in accordance with one embodiment of this invention has the following steps.

a. An operator transmits the ID number of a numerical control system he wants to call, towards all the numerical control systems under a waiting position, by employing a portable and wireless manual operating equipment.

b. The operator finds a numerical control system displaying two same ID numbers thereon, among the numerical control systems each of which displays both the ID number received and its own ID number.

c. The operator transmits an instruction signal for connecting the called numerical control system and the portable and wireless manual operating equipment employed for the calling, towards the portable and wireless manual operating equipment, by employing the called numerical control system, for the purpose to connect the numerical control system he found and the portable and wireless manual operating equipment he employed for calling.

d. After these were connected, all the numerical control systems remaining uncalled are returned to the position before the ID number was received (waiting position).

The foregoing description clarified that this invention has successfully provided a combination of a transmitter and a receiver for wireless operating a numerical control system and a method for connecting a numerical control system and a portable and wireless manual operating equipment, wherein a wrong numerical control system is not called, an arbitrary numerical control system is allowed to be operated by an arbitrary portable and wireless manual operating equipment, and a less quantity of the portable and wireless manual operating equipments is required than the quantity of the numerical control systems, because this invention has untied a numerical control system and the corresponding portable and wireless manual operating equipment and has mixed manually finding activities to the automatic system, for the purpose to remove the drawbacks specific to a firm tie with a numerical control system and the corresponding portable and wireless manual operating equipment.

**Claims**

1.  A combination of a transmitter and a receiver for wireless operating a numerical control system comprising:

    a portable and wireless manual operating equipment further comprising:

    a means which allows an operator to transmit the ID number of a numerical control system to be called, toward all the numerical control systems which are under a waiting position,

    a means for connecting said portable and wireless manual operating equipment with the called numerical control system, in response to an instruction signal issued by said called numerical control system for connecting said portable and wireless manual operating equipment with said called numerical control system, and

    a means for returning all the numerical control systems remaining uncalled, toward a position before said ID number were received, after the connection between said portable and wireless manual operating equipment and said called numerical control system is finished, and

    a numerical control system further comprising:

    a means for displaying both the received ID number and the ID number of its own, for the purpose to allow said operator to find said numerical control system displaying two same ID numbers thereon,

    a means which allows said operator to transmit said instruction signal for connecting said portable and wireless manual operating equipment with said called numerical control system, toward said portable and wireless manual operating equipment, by employing said called numerical control system, and

a means for connecting said called numerical control system with said portable and wireless manual operating equipment, in response to said instruction signal for connecting said portable and wireless manual operating equipment with said called numerical control system.

2. A method for connecting a numerical control system and a portable and wireless manual operating equipment comprising:

a step for allowing an operator to employ a portable and wireless manual operating equipment to transmit the ID number of a numerical control system to be called, toward all the numerical control systems under a waiting position, a step for allowing said operator to find a numerical control system displaying two same ID numbers thereon, and a step for allowing said operator to employ the numerical control system which was determined to be the called numerical control system to transmit an instruction signal for connecting the portable and wireless manual operating equipment with the numerical control system, toward the portable and wireless manual operating equipment, for the ultimate purpose to connect the called numerical control system and the portable and wireless manual operating equipment employed for the calling and to return all the numerical control systems remaining uncalled, to the position before the calling signal is received.

# Fig. 1

START

ID number of a numerical control
system to be called is transmitted
towards all the numerical control
systems under a waiting position, by
employing a portable and wireless
manual operating equipment — (1)

Each of the numerical control systems
under a waiting position displays the
ID number received and the ID number
of its own — (2)

An operator finds a numerical control
system displaying two same ID numbers — (3)

The operator employs the called
numerical control system to transmit
an instruction signal for connecting
the called numerical control system
and the portable and wireless manual
operating equipment employed for the
calling, toward the portable and
wireless manual operating equipment — (4)

A

(A)

The called numerical control system is connected with the portable and wireless manual operating equipment employed for the calling ——— (5)

All the numerical control systems remaining uncalled are returned to a waiting position ——— (6)

END

# INTERNATIONAL SEARCH REPORT

International Application No  PCT/JP91/01709

**I. CLASSIFICATION OF SUBJECT MATTER** (if several classification symbols apply, indicate all) [6]

According to International Patent Classification (IPC) or to both National Classification and IPC

Int. Cl[5]  G05B19/18, 19/417

**II. FIELDS SEARCHED**

| Minimum Documentation Searched [7] | |
|---|---|
| Classification System | Classification Symbols |
| IPC | G05B19/18, 19/417, H04Q9/00 |

Documentation Searched other than Minimum Documentation
to the Extent that such Documents are Included in the Fields Searched [8]

| | |
|---|---|
| Jitsuyo Shinan Koho | 1926 – 1991 |
| Kokai Jitsuyo Shinan Koho | 1971 – 1991 |

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| Y | JP, A, 54-38482 (Toshiba Corp.), March 23, 1979 (23. 03. 79), Lines 12 to 16, lower right column, page 2 (Family: none) | 1, 2 |
| Y | JP, A, 58-200686 (Nisshin Denki K.K.), November 22, 1983 (22. 11. 83), Line 11, lower right column, page 2 to line 6, upper left column, page 3 (Family: none) | 1, 2 |
| Y | JP, A, 58-33799 (Fuji Facom Seigyo K.K.), February 28, 1983 (28. 02. 83), Line 12, lower right column, page 1 to line 17, upper left column, page 2 (Family: none) | 1, 2 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure. use. exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents. such combination being obvious to a person skilled in the art

"&" document member of the same patent family

**IV. CERTIFICATION**

| Date of the Actual Completion of the International Search | Date of Mailing of this International Search Report |
|---|---|
| March 6, 1992 (06. 03. 92) | March 24, 1992 (24. 03. 92) |
| International Searching Authority | Signature of Authorized Officer |
| Japanese Patent Office | |

Form PCT ISA 210 (second sheet) (January 1985)